# EUROPEAN PATENT APPLICATION

(11) **EP 4 629 124 A1**
(43) Date of publication of application: **08.10.2025**
(21) Application number: 24305544.9
(22) Date of filing: 05.04.2024
(51) Int. Cl.: G06F 30/17, G06F 30/27, G06N 20/00

(54) **MACHINE-LEARNING IN STRUCTURAL OPTIMIZATION**

(71) Applicant: Dassault Systèmes, 78140 Vélizy-Villacoublay (FR)
(72) Inventor: PAGLIUGHI, Pierre, Vélizy-Villacoublay (FR); HEBRARD, Pascal, Vélizy-Villacoublay (FR); PERRON, Romain, Vélizy-Villacoublay (FR); QUINTIN, Sabine, Vélizy-Villacoublay (FR); FEDRITZI, Benjamin, Vélizy-Villacoublay (FR); POLLET, Nathan, Vélizy-Villacoublay (FR)
(74) Representative: Bandpay & Greuter

(57) **Abstract**

The disclosure notably relates to a computer-implemented method for machine-learning a function. The method comprises obtaining a dataset including 2D polyline profiles each representing respectively a portion of a manufacturing contour in a result of a structural optimization that represents a mechanical part, each 2D polyline profile being associated in the dataset with a respective primitive parametric curve class among a predetermined set of primitive parametric curve classes. T he method further comprises training the function based on the dataset. The function is configured to take an input 2D polyline profile and to provide an output primitive parametric curve class. Such a method forms an improved solution for processing a result of a structural optimization that represents a mechanical part.

## Description

### TECHNICAL FIELD

The disclosure relates to the field of computer programs and systems, and more specifically to methods, systems and programs related to machine-learning a function configured to take an input two-dimensional (2D) polyline profile representing a portion of a manufacturing contour in a result of a structural optimization that represents a mechanical part, and to provide an output primitive parametric curve class.

### BACKGROUND

A number of systems and programs are offered on the market for the shaping, the engineering and the manufacturing of objects. CAD is an acronym for Computer-Aided Design, e.g. it relates to software solutions for shaping an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM solutions provided by Dassault Systèmes are known for example under the trademarks CATIA, ENOVIA and DELMIA.

Existing solutions conventionally propose structural optimization functionalities. Structural optimization well-knowingly refers to a set of techniques aiming at producing shapes that present optimal mechanical properties under constraints (e.g., optimized stiffness/compliance for a maximal quantity of material available). Structural optimization techniques can be divided into three categories: sizing optimization (sometimes also called "parametric optimization"), shape optimization, and topology optimization. Topology optimization also encompasses bead optimization, which may also be referred to as a fourth category. Structural optimization, and in particular topology optimization including bead optimization, is being used more and more frequently by mechanical engineers, as it allows creating mechanical parts having new shapes, in a semi-automatic manner. The engineer only has to set an optimization program/problem defining a mechanical objective, and the software automatically runs the program to provide an optimal solution. In other words, the software automatically optimizes a certain objective function under some constraints and in a given optimization space, to output a new shape presenting optimal mechanical properties. A universal reference in this field is the textbook by Bendsøe, Martin P.; Sigmund, Ole (2004), entitled "Topology Optimization: Theory, Methods, and Applications", Springer-Verlag, Berlin, (doi:10.1007/978-3-662-05086-6).

A well-known limitation with structural optimization functionalities is that they output a discrete representation of the optimal shape of the mechanical part that the engineer wants to eventually manufacture. Said discrete representation is typically a mesh structure with a massive number of finite elements. Such a mesh structure cannot be edited by the engineer, as the number of finite elements is prohibitive and since modifications to one finite element are not automatically repercussed to other neighboring finite elements. In addition, such a mesh structure cannot be inputted as such to a manufacturing system such as a machining system, a molding or casting system, a stamping system, or a 3D printing system. This is an issue as it prevents from taking advantage of the end-to-end capabilities now offered by such manufacturing systems. Many such systems indeed allow for automatically determining CAM specifications for a mechanical part from a CAD model. These CAM specifications include control data for the system to automatically manufacture the mechanical part. But this determination of the CAM specifications can only be based on a parameterized representation of the mechanical part, for example a three-dimensional (3D) CAD model.

As a result, there has been an increasing interest in proposing solutions to convert a result of a structural optimization that represents an optimized mechanical part in a discrete manner, into a 3D CAD model representing the same mechanical part but in parameterized manner. Most existing solutions are tedious, as they require many manual interventions by the engineer. In addition, existing solutions can lead to overfitting issues, where the 3D CAD model obtained from the conversion comprises too many parameters. This is an issue in case the engineer wants to edit the model, as the engineer generally needs in such a case to intervene on and/or take into account a relatively high number of parameters for a given shaping modification he/she has in mind. Moreover, this overfitting impacts performance of the conversion into CAM specifications and/or performance of the downstream manufacturing process.

Within this context, there is still a need for an improved solution for processing a result of a structural optimization that represents a mechanical part.

### SUMMARY

It is therefore provided a computer-implemented method for machine-learning a function. The method comprises obtaining a dataset including 2D polyline profiles each representing respectively a portion of a manufacturing contour in a result of a structural optimization that represents a mechanical part. Each 2D polyline profile is associated in the dataset with a respective primitive parametric curve class among a predetermined set of primitive parametric curve classes. The method also comprises training the function based on the dataset. The function is configured to take an input 2D polyline profile representing a portion of a manufacturing contour in a result of a structural optimization that represents a mechanical part, and to provide an output primitive parametric curve class.

The machine-learning method may comprise one or more of the following:
- the function comprises a graph neural network configured to take an input graph having nodes and edges, each node of the input graph representing a respective point of the input 2D polyline profile, and each edge of the input graph being between a respective pair of nodes and representing a respective segment of the input 2D polyline profile between the points represented by the respective pair of nodes;
- the input graph comprises, at each node, coordinates of the respective point represented by the node;
- the input graph comprises, at each node between a respective pair of edges, an angle between the respective pair of edges;
- the graph neural network comprises several graph layers each including a graph convolutional layer and a regularization function, followed by a graph pooling layer;
- the function comprises a neural network configured to take input information relative to at least one of: openness or closeness of the input 2D polyline profile, a measurement of perimeter of the input 2D polyline profile, and a measurement of a surface area of one or more bounding boxes of the input 2D polyline profile;
- the predetermined set of primitive parametric curve classes comprises at least one class of primitive parametric curves having a variable number of sides, the function being further configured to output a value of the number of sides, when the function provides as output a primitive parametric curve class among the at least one class;
- the at least one class comprises a rounded polyline class and/or a rounded polygon class;
- the training comprises minimizing a loss function which comprises a term penalizing underprediction of the number of sides; and/or
- the predetermined set of primitive parametric curve classes comprises at least one of: a rounded polyline class, a rounded polygon class, a spline-by-points class, a segment class, a square class, a rectangle class, a circle class, an ellipse class, a tear drop class, and an elongated hole class.

It is further provided a method of use of a function machine-learnt according to the machine-learning method. The method of use comprises obtaining an input 2D polyline profile representing a portion of a manufacturing contour in a result of a structural optimization that represents a mechanical part. The method of use also comprises applying the function to the input 2D polyline profile, thereby providing an output primitive parametric curve class.

The method of use may comprise one or more of the following:
- the method of use further comprises reconstructing a 3D CAD model of the mechanical part based on the output primitive parametric curve class;
- the reconstructing of a 3D CAD model includes instantiating a CAD planar feature parameterized with an instantiated curve of the output primitive parametric curve class;
- the reconstructing of a 3D CAD model includes instantiating a CAD volumetric feature which includes an extrusion of the CAD sketch feature; and/or
- the method of use further comprises determining CAM specifications based on the 3D CAD model, the CAM specifications including control data for material removal in a manufacturing process of the mechanical part, the material removal being performed along the manufacturing contour.

It is further provided a data structure representing a function machine-learnt according to the machine-learning method. The values of parameters and/or weights of the function are thus those obtained after the training.

It is further provided a computer program comprising instructions for performing the machine-learning method and/or the method of use.

It is further provided a computer readable storage medium having recorded thereon the computer program and/or the data structure.

It is further provided a system comprising a processor coupled to a memory and a graphical user interface, the memory having recorded thereon the computer program and/or the data structure. The system may further comprise a graphical user interface coupled to the processor.

It is further provided a device comprising a data storage medium having recorded thereon the computer program and/or the data structure.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- FIG. 1 shows a flowchart of an example of the machine-learning method;
- FIG. 2 shows a flowchart of an example of the method of use;
- FIG. 3 shows an example of a graphical user interface of the system;
- FIG. 4 shows an example of the system; and
- FIG.s 5-24 illustrate implementations and tested examples of the methods.

### DETAILED DESCRIPTION

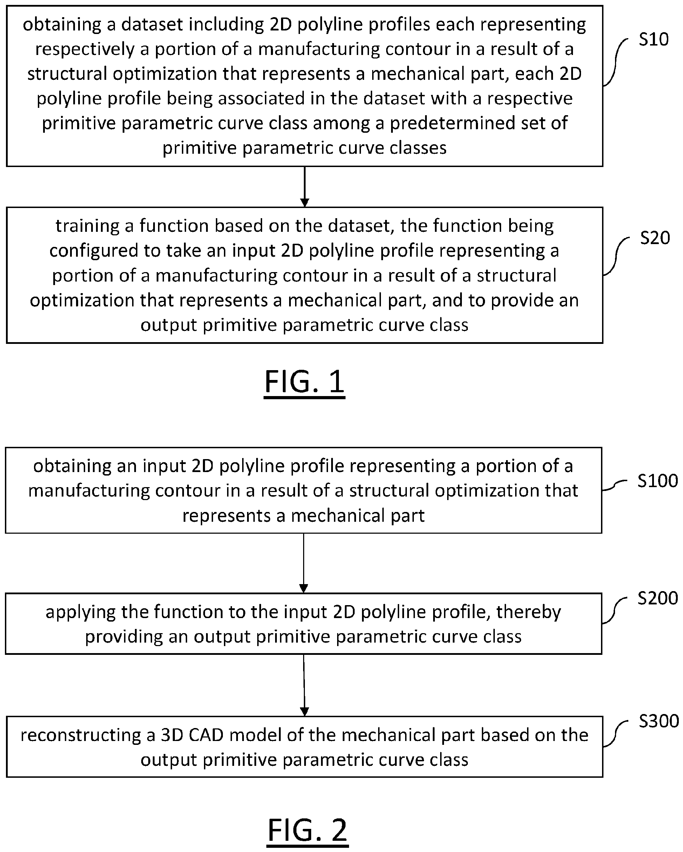

With reference to the flowchart of FIG. 1, it is proposed a computer-implemented method for machine-learning a function. The machine-learning method comprises obtaining S10 a dataset including 2D polyline profiles. Each 2D polyline profile represents respectively a portion of a manufacturing contour in a result of a structural optimization. Said result of the structural optimization represents (the shape of) an optimized mechanical part, thus forming a digital mockup of the mechanical part. Each 2D polyline profile is associated (i.e., related/coupled/labeled) in the dataset with a respective primitive parametric curve class, e.g., from a prior operation called "labeling". Each respective primitive parametric curve class is one among a predetermined set of primitive parametric curve classes. The machine-learning method further comprises training S20 the function based on the dataset. The function is configured to take an input 2D polyline profile representing a portion of a manufacturing contour in a result of a structural optimization, where said result represents a mechanical part, and to provide an output primitive parametric curve class.

Such a machine-learning method forms an improved solution for processing a result of a structural optimization that represents an (optimized) mechanical part.

The machine-learning method allows to automatically set (offline) a function that can be used for such processing, by obtaining at S10 a dataset of training examples (i.e., training patterns/samples/data points) each including (at least) a respective 2D polyline profile associated with a respective primitive parametric curve class that constitutes a ground truth value, and by performing the training S20 based on such a dataset. The function is indeed thus configured for processing any input 2D polyline profile which represents a manufacturing contour of a mechanical part, and which is obtained from the result of a structural optimization that has been performed to generate the shape of the mechanical part. The function is specifically configured for processing (online) such an input 2D polyline profile so as to output (infer/predict) a respective class among the predetermined set of primitive parametric curve classes.

Thus, the function determines for an initially raw and unexploitable curve, i.e., the input 2D polyline profile, the class of a parametric and compact/primitive curve into which the initial curve can appropriately be converted, i.e., the respective primitive parametric curve class. The function may thus automatically provide such information, based exclusively on the input 2D polyline profile, such that the mechanical engineer is relieved from having to perform this task manually.

In addition, by enabling output of any class among a predetermined set of several possible classes, the function offers a flexibility that allows optimal adaptation to the input 2D polyline profile. For example, the predetermined set of classes may comprise classes involving different numbers of parameters to define a respective primitive parametric curve, and/or the function may be adapted such that when applied to different input 2D polyline profiles, the function may provide different output classes and/or outputs that involve different numbers of parameters to define a respective primitive parametric curve. This adaptability, offered by the presence of a plurality of primitive curve classes to select from, is in contrast with a solution that would systematically convert each input 2D polyline profile into a same type of parametric curve and/or a parametric curve having the same number of parameters. Such a solution could for example amount to systematically converting an input 2D polyline profile into a 2D B-Spline curve having a fixed number of control points, such as 20 control points (thus involving 40 parameters in total, each 2D control point being defined by two coordinates, e.g., where each coordinate can be a decimal or real number). In contrast, the proposed machine-learning method allows avoiding or reducing potential overfitting issues.

With reference to the flowchart of FIG. 2, it is thereby also proposed a method of use of such a machine-learnt function (i.e., a function trained according to the machine-learning method of FIG. 1). The method of use comprises obtaining S100 an input 2D polyline profile which represents a portion of a manufacturing contour in a result of a structural optimization, where said result of the structural optimization represents (the shape of) a mechanical part. The result of the structural optimization thus forms a digital mockup of the mechanical part. The method of use also comprises applying S200 the function to the input 2D polyline profile. The method of use thereby provides an output primitive parametric curve class, e.g., automatically, without the user having to intervene.

The method of use may comprise obtaining at S100 several distinct 2D polyline profiles each representing a respective portion of a manufacturing contour in a same structural optimization result, for example all such 2D polyline profiles for said structural optimization result. The method of use may in such a case comprise applying at S200 the function separately to each obtained 2D polyline profile, thereby outputting for each application S200 a respective primitive parametric curve class. The method of use may thus output several distinct parametric curve classes (depending on the input 2D polyline profiles).

The method of use may comprise later editing, by a mechanical engineer, one or more parameter values of an instantiated curve of the output primitive parametric curve class. Since an instantiated curve of the output primitive parametric curve class may be more canonical than a 2D polyline profile (this being almost always the case), and may be more canonical than a B-Spline curve having 20 control points (this being most often the case, as this may be true for all classes but a class of B-Spline curve having 20 control points), such edits are facilitated (as fewer parameters are to be taken into account). By "more canonical", it is meant that fewer parameters are involved in the specification of the curve. Such editing may be performing after the reconstruction of a 3D CAD model which is discussed later, and/or the editing may be performed for one or more instantiated curves, when the applying S200 is performed several times.

Each primitive parametric curve class among the predetermined set of primitive parametric curve classes may be sufficiently represented in the dataset, thus allowing an accurate output whichever the situation. The dataset may be fully-balanced across the predetermined set of primitive parametric curve classes. For example, each primitive parametric curve class may have a number of representatives in the dataset equal to the average number of representatives per class, plus or minus 10%. Alternatively, the dataset may be unbalanced, but the training S20 may implement a class-weighting strategy to reduce the bias toward over-represented classes. In examples, the dataset obtained at S10 may be obtained from an initial dataset which is unbalanced, and the machine-learning method may comprise data augmentation, resulting in the generation of synthetic (i.e., derived/artificial objects) data points (i.e., 2D polyline profiles), in a manner that eliminates imbalance (in which case class-weighting strategy may be unrequired) or reduces the initial imbalance (in which case class-weighting strategy may further be implemented).

Additionally or alternatively, the dataset may comprise a global number of 2D polyline profiles higher than 500 or 800 (counting together all 2D polyline profiles associated with any one of the predetermined set of primitive parametric curve classes). The dataset may comprise a number of 2D polyline profiles higher than 50 or 80 per primitive parametric curve class, for all classes or for at least 80% of the classes. As the number of classes contained in the predetermined set becomes higher, the minimal number of training examples required per class for an accurate training S20 becomes lower. It has indeed been found that the function can learn to recognize classes not only by recognizing their characteristics as seen during the training S20, but also by recognizing absence of characteristics of other classes as seen during the training S20.

The obtaining S10 may for example comprise building a dataset according to a specific dataset-forming method, or retrieving a dataset having been built according to said dataset-forming method.

The dataset-forming method may comprise generating or retrieving a number of results each of a respective structural optimization and that each represents a respective mechanical part. The dataset-forming method may further comprise determining or retrieving, for each respective result, (e.g., all) 2D polyline profiles representing each respectively a portion of a manufacturing contour. The dataset-forming method may comprise, manually by a mechanical engineer or automatically by a deterministic algorithm, defining an optimal class among the predetermined set of primitive parametric curve classes for each respective 2D polyline profile of the dataset. In other words, the dataset is annotated, whereby each real 2D polyline profile is annotated/labeled with a ground truth class. The manual annotation by a mechanical engineer may comprise repetitions of: displaying a 2D polyline profile in a CAD system, and, by the mechanical engineer performing a user-interaction with the CAD system, labeling the profile with a class among the predetermined set of primitive parametric curve classes.

The optimal class may be one that has a minimal number of parameters under a constraint that a curve from the class exists and is below a certain threshold value of a curve-to-curve distance from the respective 2D polyline profile. In case there are several such classes with said minimal number of parameters, the optimal class may be one that has a curve which minimizes said curve-to-curve distance. Alternatively, the optimal class may be one that achieves an optimal compromise between the number of parameters and the curve-to-curve distance (e.g., the optimal class may be the one having a curve minimizing a cost function or metric which penalizes both a high number of parameters and a high curve-to-curve distance). The curve-to-curve distance may for example be an area of a symmetric difference between the two considered curves (i.e., between the set of points of the 2D polyline profile and the set of points of the primitive curve), a Hausdorff distance between the two considered curves, or an average over the points of the 2D polyline profile of the square of the Euclidian distance to the primitive curve. Thus, the machine-learning aims at training a function adapted for outputting a class with a minimal number of parameters whenever appropriate, that is, as long as the input 2D polyline profile can be approximated sufficiently well by a curve of that class.

A mechanical engineer can easily identify such optimal class in the predetermined set of primitive parametric curve classes. A deterministic algorithm can also automatically identify such optimal class, by looping over the respective classes of the predetermined set, starting from the classes having the lowest number of parameters, and computing a curve that belongs to the respective class and minimizes curve-to-curve distance from the respective 2D polyline profile. Such an algorithm may be computationally heavy to run, which is why it may be used only offline, and the method of use rather applies the machine-learnt function at S200.

The dataset-forming method may further comprise implementing different data standardization, data regularization, and/or data augmentation strategies to improve the training S20.

In case the dataset-forming method comprises data standardization, that is standardization of the 2D polyline profiles of the dataset, the method of use may comprise a corresponding standardizing of the input 2D polyline profiles when performing S200 (as a prior step when applying the function). Standardizing a 2D polyline profile of the dataset and/or an input 2D polyline profile may comprise normalizing and/or centering coordinates of (e.g., all) points of the 2D polyline profile.

In case the dataset-forming method comprises data regularization, the method of use may or may not comprise a corresponding regularizing of the input 2D polyline profiles when performing S200 (as a prior step when applying the function). Regularizing a 2D polyline profile of the dataset and/or an input 2D polyline profile may comprise removing or adding points to the 2D polyline profile, for example to reach a fixed number of points per 2D polyline profile, or a number of points within a range or which is a function of certain parameters of the initial profile.

In case the dataset-forming method comprises data augmentation, the augmentation may comprise generating artificial/synthetic 2D polyline profiles under the constraint of reaching a fully-balanced dataset or of improving balance of the dataset. The data augmentation thus favors the generation of synthetic representatives of under-represented classes. The dataset-forming method may comprise synthesizing 2D polyline profiles by rotating 2D polyline profiles already in the dataset, removing and/or adding points to 2D polyline profiles already in the dataset for example to achieve variable numbers of points per initial 2D polyline profile, and/or performing symmetries on points of 2D polyline profiles already in the dataset with respect to determined axes (e.g., principal inertial axes).

The function may comprise at least one neural network. The training S20 may be performed according to any conventional technique known for machine-learning a classifier, i.e., a classifying neural network. The training S20 may for example comprise minimizing a loss function over the dataset, for example a loss function based on a categorical cross entropy. The minimizing may proceed as known epoch-by-epoch and/or mini-batch-by-mini-batch, and/or according to a stochastic gradient descent (e.g., using backpropagation).

A 2D polyline profile is a 2D polyline curve, that is, a list of points in a same plane and defining a continuous curve by joining consecutive pairs of points of the list each by a respective segment (i.e., straight bounded line). A 2D polyline profile may be closed, wherein the last point of the list is joined to the first point, or alternatively open, wherein the first point and the last point define free extremities. The dataset may thus comprise both closed 2D polyline profiles and open 2D polyline profiles. Any input 2D polyline profile provided to the machine-learnt function may be closed, or alternatively open. The machine-learnt function may be configured for processing accurately both types of input 2D polyline profiles, when the dataset comprises both types of input 2D polyline profiles (e.g., each type making up for at least 10% or 30% of the dataset).

A 2D polyline profile may comprise any number of points, up to hundreds of points. At least 50% or 75% of the 2D polyline profiles of the dataset may each include more than 25 points, or more than 50 points. Any input 2D polyline profile provided to the machine-learnt function may similarly include more than 25 points, or more than 50 points. Such an input 2D polyline profile is thus defined by at least 50 coordinates, respectively at least 100 coordinates, each 2D point being defined by two coordinates, e.g., where each coordinate can be a decimal or real number. Any decimal or real number herein may be digitally represented by a decimal value or a double or floating point value.

The machine-learnt function may be configured to output a meta-parameterization of a curve belonging to the output primitive parametric curve class and into which the input 2D polyline profile can be converted. Accordingly, each 2D polyline profile in the dataset may be associated with all (ground truth) information to provide a meta-parameterization. The meta-parameterization may specify all data fields for a digital representation the curve, but not the value of those fields. For example, a segment may be digitally specified by its length such that a meta-parameterization of a segment would amount to a real number data field L, but without providing any double or floating point value for this field. The meta-parameterization of a curve defines the number of parameters required for a digital representation the curve. Each data field may be an integer value, a decimal value, or a double or floating point value, digitally representing a parameter of a curve which is an integer number, a decimal number, or a real number.

The method of use may output, for at least one (e.g., each) 2D polyline profile of the considered result of the structural optimization, a meta-parameterization having a number of parameters lower than 100 or 50, for example at most 40. The method of use may output, in average across the plurality of 2D polyline profiles of the considered result, a number of parameters lower than 30 per input 2D polyline profile.

The predetermined set of primitive parametric curve classes may optionally comprise at least one class of primitive parametric curves having a variable number of sides. In such a case, the machine-learnt function may be configured to output a value of the number of sides, further to providing as output the at least one class. In the context of structural optimization, related 2D polyline profiles can sometimes be converted into primitive curves which are characterized by a number of sides. The at least one class may for example comprise a rounded polyline class and/or a rounded polygon class. Outputting the number of sides helps a quick conversion of the 2D polyline profile into a curve of the at least one class, compared to a solution that would in contrast determine the number of sides by a deterministic algorithm once the at least one class is known. It has been found that the proposed machine-learning approach not only can predict accurately the optimal primitive class, but also can it predict accurately the optimal number of sides (when applicable).

The function may comprise a single neural network that provides as output, for an input 2D polyline profile, both a primitive parametric curve class and, when applicable (i.e., when the output class is among the at least one class), the number of sides. This facilitates the training, as weights and/or parameters of the single neural network are all optimized at once. Alternatively, the function may comprise a first neural network that provides as output, for an input 2D polyline profile, the primitive parametric curve class, and a second neural network that is applied only when relevant (i.e., when the output class is among the at least one class), and that provides as output the number of sides. This specializes tasks across distinct neural networks each trained separately for its own task, thus improving accuracy.

In case the predetermined set of primitive parametric curve classes comprises at least one class of primitive parametric curves having a variable number of sides, the method of use may accordingly comprise, when the class outputted after S200 is among the at least one class, providing an additional output corresponding to the number of sides.

The meta-parameterization may consist of the output class together with the number of sides, when the output class is among the at least one class, and of the output class alone otherwise. For a class having a variable number of sides, the number of sides together with the class itself fully specify the number of parameters required for instantiating a corresponding curve. This is because each side involves its own parameters. For other classes, the class itself suffices to fully specify the number of parameters required for instantiating a corresponding curve.

In case the predetermined set of primitive parametric curve classes comprises at least one class of primitive parametric curves having a variable number of sides, the training S20 may comprise minimizing a (e.g., categorical cross entropy-based) loss function which comprises a term penalizing underprediction of the number of sides. This improves accuracy after conversion of the input 2D polyline profile into a curve of the output class, as an underprediction of the number of sides would lead to a too high approximation error (since an insufficient number of parameters is available to make an accurate approximation). In other words, the training S20 tends to prefer to overfit rather than underfit.

The number of sides may vary from 1 and optionally up to a maximal number higher than or equal to 3, for example equal to 6. In such a case the function (e.g., dedicated neural network) may be configured to output an integer from 1 to said maximal number to indicate the predicted number of sides, e.g., and 0 to indicate a higher (unspecified) number of sides. The dataset may thus optionally be populated with 2D polyline profiles associated with one among the at least one class, but in such a case exclusively with a number of sides systematically at most equal to said maximal number of sides. Accordingly, the output number of sides of the function may systematically be at most equal to said maximal number. A preparation of the dataset may comprise converting any ground truth curve class with an number of sides higher than the maximal number into another appropriate ground truth, such as a B-Spline class having a sufficient number of control points (e.g., higher than 10, for example equal to 20) to replace accurately the initial ground truth. Correspondingly, if at inference the function outputs 0 or any other indication that the number of sides is higher than the maximal number, then the function may be forced to output another appropriate primitive class, such as a B-Spline class having a sufficient number of control points (e.g., higher than 10, for example equal to 20).

The predetermined set of primitive parametric curve classes may consist of classes of 2D parametric curves with a reduced number of parameters and that are usually encountered in manufacturing contour profiles of mechanical parts.

The predetermined set of primitive parametric curve classes may in particular comprise at least one (e.g., any combination, such as all) of the following classes: a rounded polyline class, a rounded polygon class, a spline-by-points class, a segment class, a square class, a rectangle class, a circle class, an ellipse class, a tear drop class, and an elongated hole class. Such classes cover substantially all or most smooth curved profiles encountered in manufacturing mechanical parts.

The rounded polyline may have a variable of number of sides (i.e., segments), and it may have the following (e.g., comprehensive) list of a variable number of parameters: a respective length *Li* for each segment, a respective angle between two consecutive segments, and a constant radius *R* for rounding the junction between two consecutive segments.

The rounded polygon class may have a variable of number of sides, and it may have the following (e.g., comprehensive) list of a variable number of parameters: a respective length *Li* for each side, and a constant radius *R* for rounding the junction between two consecutive sides. A rounding polygon differs from a rounded polyline in that the latter is a closed curve whereas the former is an open curve.

The spline-by-points class may correspond to a spline curve such as a B-Spline curve, having a number of control points higher than 10, for example equal to 20. The class may have the following (e.g., comprehensive) list of a number of parameters equal to twice the number of control points: 2D coordinates of each control point.

The segment class may have the following (e.g., comprehensive) list of one single parameter: length *L* of the segment.

The square class may have the following (e.g., comprehensive) list of two parameters: length *A* of the sides, and constant radius *R* for rounding the corners.

The rectangle class may have the following (e.g., comprehensive) list of three parameters: width *A* of the shortest sides, length B of the longest sides, and constant radius *R* for rounding the corners.

The circle class may have the following (e.g., comprehensive) list of one single parameter: radius *R* of the circle.

The ellipse class may have the following (e.g., comprehensive) list of two parameters: length *A* of the semi-major axis, and length *B* of the semi-minor axis.

The elongated hole class may have the following (e.g., comprehensive) list of two parameters: radius value *R* for two extremity semi-circles, and length *L* between the centers of both semi-circles (i.e., the centers of both underlying circles). An elongated hole may be a closed curve consisting of two semi-circles sharing a same symmetrical axis, each extremity of a semi-circle being joined by a segment to the extremity of the other semi-circle located on the same side of the symmetrical axis, the two semi-circles being each formed such that that they do not intersect the segment joining the centers of the two semi-circles, the elongated hole curve thus forming a convex interior having the shape of an elongated and convex hole.

The tear drop class may have the following (e.g., comprehensive) list of three parameters: distinct radius values *R1* and *R2* for its extremity circle sections, and length *L* between the centers of both circle sections (i.e., the centers of both underlying circles). A tear drop may be a closed curve consisting of two sections each of a respective circle, the two sections sharing a same symmetrical axis, each extremity of a circle section being joined tangent-continuously by a segment which also joins tangent-continuously the extremity of the other circle section located on the same side of the symmetrical axis, the two circle sections being each formed such that that they do not intersect the segment joining the centers of the two circle sections, the tear drop curve thus forming a convex interior having the shape of a tear drop. A tear drop curve is similar to an elongated hole curve, except that its two extremities are circle sections of different radii.

All the above parameters may be encoded by a double or floating point value in the CAD system. In addition, a curve of any of the above primitive parametric curve classes may have a referential frame, e.g., (O,x,y), positioned in a conventional unique manner with respect to the curve. For example, a segment may be positioned with one extremity located at the origin O of the referential frame, and the other extremity at a positive abscissa value equal to the length *L* of the segment. A rounded polyline may be positioned with its first point located at the origin O of the referential frame, the second point at a positive abscissa value equal to the length *L1* of the first segment, and the third point at positive ordinate value.

The constant radius *R* used for rounding segment junctions and/or corners may represent a radius of a machining tool or milling tool to be used to machine or mill the mechanical part, in case of a machining or milled part, or to machine or mill the mold/cast or the stamping device required to produce the mechanical part, in case of a molded or casted part or of a stamped part. The constant radius may thus be fixed and imposed as a constraint in forecast of the manufacturing, or alternatively it may be variable and optimized when fitting a curve (after having inferred the primitive class), or even predicted by the function. In such a case the manufacturing may be adapted to the value found for said constant radius *R.*

The method of use is now discussed in more detail.

The obtaining S100 is first discussed in more detail. The discussion also applies to each initial 2D polyline profile of the dataset, which may be obtained similarly in the dataset-forming method (before standardization and/or augmentation).

The obtaining S100 may comprise performing a structural optimization or retrieving the result of a structural optimization. The structural optimization may be a topology optimization and/or a bead optimization. The structural optimization may be any type of structural/topology/bead optimization, and for example comprise, as known, providing a gridding of a representation or design space, optimizing an objective function over the representation space so as to yield a density field, and then thresholding the density field so as to provide a discrete representation of the mechanical part in the form of a mesh representing a shape of the mechanical part. The structural/topology/bead optimization may for example optimize stiffness and/or compliance under some constraints, such as related to available material (for example a constraint of using at most a maximum quantity of material). In another example, the structural/topology/bead optimization may for example minimize use of material, under a minimal stiffness constraint.

The structural optimization may be a 2D structural optimization, such as surface topology optimization or a bead optimization, in which case the result of the structural optimization is a 2D mesh, for example a triangular or quad mesh or any polygonal mesh.

The 2D structural/topology/bead optimization may aim at shaping a mechanical part of a substantially constant thickness and commonly known as a "thin part". Bead optimization may aim at adding stiffening elements called "stiffening beads" to the thin part (referred to as "shell"). The mechanical part may for example be a sheet metal part and/or an aerospace thin part. The aerospace is indeed known for requiring light and thin structures made of highly resistant materials, for example to equip satellites in a way to minimize weight.

The 2D mesh may be non-planar. The mechanical part may be a molded part such as an injection-molded part, and a base surface of the mold may be non-planar. The molded part may comprise through holes along a manufacturing direction by way of using inserts during the molding, and/or by way of machining or milling the part after molding. The manufacturing direction is the direction normal to the 2D mesh, and it may be represented by the direction normal to a planar surface resulting from a flattening of 2D mesh. In such a case, each input 2D polyline profile represents a portion of the silhouette of the mechanical part or of a through hole contour of the mechanical part in a plane containing said planar surface. The plurality of input 2D polyline profiles may represent together the whole silhouette and all through hole contours in said plane.

The 2D mesh may alternatively be planar. The mechanical part may be a stamping part or a machined or milled sheet part. The mechanical part may be a sheet metal part and/or a folded sheet part. In such a case, the 2D mesh may represent the part as unfolded. The mechanical part may comprise through holes by way of stamping and/or machining the part. In such a case, each input 2D polyline profile represents a portion of the silhouette of the mechanical part or of a through hole contour of the mechanical part (as unfolded, when applicable, i.e., when the mechanical part is a folded sheet part) in the plane of the mesh. The plurality of input 2D polyline profiles may represent together the whole silhouette and all through hole contours in said plane.

The structural/topology optimization may be a 3D structural/topology optimization (e.g., solid topology optimization), in which case the result of the structural optimization is a 3D mesh, for example a tetrahedral or any polyhedral mesh. The mechanical part may be a molded or casted part, a 3D printing part, or a machined or milled part. The mechanical part may comprise through holes along one or more manufacturing directions. For example, if the mechanical part is a 3D printing part, the mechanical part may comprise through holes along a single manufacturing direction, which is the 3D printing direction (i.e., the direction of stacking the 3D printing layers, which is generally the vertical direction). If the machined part or molded part, the mechanical part may comprise through holes in one or several manufacturing directions, corresponding to the orientation(s) of inserts used in the molding and/or to the machining direction(s). In such a case, each input 2D polyline profile represents a portion of the silhouette of the mechanical part or of a through hole contour of the mechanical part in a respective plane normal to a manufacturing direction. The plurality of input 2D polyline profiles may represent together the whole silhouette and all through hole contours for all manufacturing directions, in one or more normal planes.

In the case of a 3D structural/topology optimization, the manufacturing direction(s) may be specified within the constraint(s) of the 3D structural/topology optimization, and may thus be retrieved as such. For example, the topology optimization may be run with one or more casting, milling, and/or prismatic constraints. A casting constraint may specify a demolding or uncasting direction. A milling constraint may specify a milling direction. A prismatic constraint may specify a rib-milling direction.

The obtaining S100 may comprise determining said planar silhouette and planar through hole contours in any manner. For example, the obtaining S100 may comprise projecting the result of the structural/topology optimization in said plane(s), and directly determining polylines which represent said planar silhouette and planar through hole contours as boundaries of projected polygons or polyhedral which separate presence of material from absence of material.

The obtaining S100 may then comprise partitioning said planar silhouette and planar through hole contours in any manner. This may be performed manually by the mechanical engineer. The obtaining S100 may for example comprise displaying said planar silhouette and planar through hole contours in any manner, and by the mechanical engineer, drawing each input 2D polyline profile manually (e.g., by graphical interaction).

Alternatively or additionally, the partitioning may be performed automatically or semi-automatically.

For example, the partitioning may be performed based on a segmentation algorithm. The segmentation algorithm may be configured for directly partitioning/segmenting said planar silhouette and planar through hole contours into the plurality of input 2D polyline profiles to be next processed. Alternatively, the segmentation algorithm may be configured for automatically partitioning/segmenting the planar representation into consistent segments forming blocks of material or unitary regions of absence of material (i.e., a "unitary" region of absence of material being a substantially convex block where material is absent). In this case, the plurality of input 2D polyline profiles may be determined as the boundaries of such segments. Yet alternatively, the segmentation algorithm may be a region growing algorithm, requiring the mechanical engineer to define seeds each for a respective segment to be obtained. Such a region growing algorithm may then comprise, as above, directly partitioning/segmenting said planar silhouette and planar through hole contours into the plurality of input 2D polyline profiles to be next processed (i.e., curve growing algorithm), or determining regions of presence of absence of materials, the plurality of input 2D polyline profiles corresponding to boundaries of such regions. As known, such a segmentation algorithm tends to result in a plurality of input 2D polyline profiles that are substantially convex or substantially concave. This allows next outputting relatively often primitive parametric curve classes other than and more canonical than rounded polylines, or at least than B-Splines.

Alternatively, or additionally, the partitioning may be performed based on parameters of the structural optimization. The structural optimization performed within or prior to the obtaining S100 may be based on one or more parameters that can be stored and thus retrieved at S100, for example within the data file representing the result of the structural optimization. As mentioned above, the structural optimization may in particular be a topology or bead optimization and/or comprise providing a gridding of a design space (for a density field to be optimized over said gridding and later thresholding). As known, such a structural optimization may comprise one or more constraints that force material to be present over certain portions of the gridding, called "frozen" portions. Such constraints are also known as clamping conditions. These frozen portions or clamping conditions may define areas where the structural (e.g., topology or bead) optimization is not allowed to remove material, and therefore the geometry must remain accurate. Such information may be provided at S100, and the partitioning may comprise determining one or more first continuous pieces of the silhouette and of the through hole contours that bound frozen portions, and extracting each such first continuous piece. The partitioning may then comprise outputting each first continuous piece as a single input 2D polyline profile, such that the method of use can apply the machine-learnt function separately to each first continuous piece, for primitive class prediction and primitive curve fitting. Alternatively, the method of use may directly compute an exact (e.g., primitive) geometry for each first continuous piece. Because the frozen portions have a known geometry due to them having been impose as constraints in the structural optimization, the geometry of a first continuous piece can be directly determined. In both cases, the extraction of the first continuous pieces subdivides the silhouette and the through hole contours, leaving aside second continuous pieces, each second continuous piece being a continuous piece of the silhouette or a through hole contour that does not bound any frozen portion. Each second remaining continuous piece of the silhouette and/or of a through hole contour may then be outputted as a single input 2D polyline profile, such that the method of use can apply the machine-learnt function separately to each second continuous piece, for primitive class prediction and primitive curve fitting.

Several such alternatives may be combined, as the user may optionally be enabled to edit an automatic suggestion, and/or the method may automatically provide several suggestions, and/or both use segmentation and information from the structural optimization to output a suggestion.

After applying the function at S200 and thereby providing an output primitive parametric curve class for one or more input 2D polyline profiles, the method may optionally comprise further steps toward reconstructing S300 a 3D CAD model based on the output primitive parametric curve class(es).

The reconstructing S300 may comprise fitting each respective 2D polyline profile with a curve of the primitive parametric curve class outputted at S200 for the respective 2D polyline profile. In other words, the method of use may comprise computing/instantiating a curve of the outputted class best approximating the input 2D polyline profile. Such fitting may be performed under the constraint that for two curves fitted to two respective 2D polyline profiles originally joined one to another, the two fitted curves must also be joined. The fitting may further comprise applying a rounding at each such junction, for example based on the constant round radius R mentioned earlier. When the 2D polyline profiles form an exact partitioning of the silhouette and all through hole contours of a mechanical part of a unitary piece or block of a mechanical part, as seen along one manufacturing direction, then such constraint ensures that the union of all fitted curves still properly represents a continuous silhouette and all continuous through hole contours.

Fitting a 2D polyline profile defined in a certain referential frame with a curve of a certain primitive parametric curve class with a certain number of sides (when applicable) may amount to automatically optimizing the positioning of the referential frame of the curve in the referential frame of the 2D polyline profile and of the values of the list of parameters of the primitive class such that a curve-to-curve distance is minimized between the 2D polyline profile and the primitive curve. The curve-to-curve distance may for example be an area of a symmetric difference between the two considered curves (i.e., between the set of points of the 2D polyline profile and the set of points of the fitted primitive curve), a Hausdorff distance between the two considered curves, or an average over the points of the 2D polyline profile of the square of the Euclidian distance to the fitted primitive curve. Once the target primitive class is known and (when applicable) the number of sides is also known, the fitting is relatively fast.

Alternatively, the fitting may comprise displaying the 2D polyline profile in a CAD system, displaying an instance of a primitive curve of the primitive parametric curve class having default parameter values, superimposed over the 2D polyline profile in a CAD system, and by a mechanical engineer user-interacting with the CAD system, modifying the parameter values of the primitive curve so as to best approximate the 2D polyline profile. The mechanical engineer is relieved from having to select the primitive parametric curve class in such a case. The modification of the parameter values may comprise, by the mechanical engineer, graphical operations such as drag-and-drop operations on the primitive curve and/or on graphical manipulators displayed thereon, and/or entering numerical values for one or more parameters of the curves in one or more dialog boxes.

The reconstructing S300 may further comprise instantiating a (respective) CAD planar feature, for example a 2D sketch feature, normal to the (each) manufacturing direction, and parameterized with the union of all curve(s) instantiated (with respect to the manufacturing direction). In other words, for each manufacturing direction, all curves fitting the 2D polyline profiles relative to the manufacturing direction are gathered in a respective 2D sketch feature. Thus, each 2D sketch feature represents the silhouette and all through hole contours of the mechanical part along a respective manufacturing direction, in a parameterized and canonical manner.

The 3D CAD model may be feature-based, which means as known that the 3D CAD model may be specified by a CAD feature tree. The method of use may thus be embedded in a process of constructing or editing a CAD feature tree which represents a shape of the mechanical part. As opposed to the discrete representation resulting from the structural optimization, a CAD feature tree forms a compact, parameterized and editable digital mockup of a mechanical part. In particular, each 2D sketch feature may be easily edited, as the mechanical engineer may modify the value of one or more parameters of the curves fitted onto the original 2D polyline profiles.

The CAD feature tree may represent a series of geometrical operations to be performed in an order inverse to the acyclic data flow of the feature tree, where the root node represents the final shape of the mechanical part. Each node of the tree defines a geometrical operation, which takes as input one or more geometries from edges pointing to the node. A 2D sketch feature represents a 2D curve and can be inputted to any other type of CAD feature.

The reconstructing S300 may for example comprise instantiating a CAD volumetric feature, such as a pocket or cut feature (i.e., representing subtraction of material) or a pad feature (i.e., representing addition of material) which includes an extrusion of the CAD sketch feature. The extrusion is specified by a direction, e.g., normal to the plane of the 2D sketch feature, i.e., the respective manufacturing direction, and by an extrusion length (i.e., positive number). Since an input 2D polyline profile represents a portion of a manufacturing contour of the mechanical part, it represents, with respect to a manufacturing direction (equivalent to the extrusion direction), presence of material on one side of the profile and absence of material on the other side of the profile. Such arrangement of material may be represented in the feature tree by having a first parent node representing a block of material and a second parent node representing the pocket feature, and a child node representing subtraction of the output of the first parent node by the output of the second parent node. Alternatively, the same arrangement of material may be represented in the feature tree by inputting the result of the 2D sketch feature to a pad feature node, thereby filling with material the volume bounded by the surface resulting from the extrusion.

Thus, the method of use may comprise:
- performing a structural optimization or retrieving the result of a structural optimization;
- optionally, displaying the result of the structural optimization;
- determining one or more manufacturing directions, for example by merely retrieving the one or more manufacturing directions from the result of the structural optimization or from its initial specifications (which may be stored);
- for each manufacturing direction:
   ∘ determining the silhouette of the mechanical part from the result of the structural optimization, along the manufacturing direction;
   ∘ determining the contours of all through holes along the manufacturing direction;
   ∘ optionally, displaying the silhouette and the through hole contours;
   ∘ partitioning the union of the silhouette and all through holes contours into a plurality of input 2D polyline profiles;
   ∘ applying S200 the machine-learnt function to each input 2D polyline profile, thereby providing a respective output primitive parametric curve class;
   ∘ fitting the each input 2D polyline profile with an optimal primitive parametric curve of the class;
   ∘ optionally, displaying the resulting curves;
   ∘ parameterizing a CAD sketch feature with the union of all fitted curves, e.g., said union resulting in one or more closed curves;
   ∘ instantiating a CAD volumetric feature which includes an extrusion of the CAD sketch feature, for example a pocket feature representing removal of all material that can be encountered by a line that falls outside the one or more closed curves, or alternatively a pad feature;
- optionally, instantiating a block material feature (also known as "stock" feature), and applying each pocket feature to the block material feature).

The method of use thus converts a raw structural optimization representation into a standard 3D CAD model.

The method of use may optionally further comprise determining (e.g., automatically) CAM specifications based on the 3D CAD model, in any manner known *per se.* The CAM specifications including control data for material removal in a manufacturing process of the mechanical part. The manufacturing process may comprise: a molding process, such as an injection-molding process, optionally using one or more inserts, or a casting process; a stamping process, for example a sheet metal stamping process, optionally including a sheet-folding process; a 3D printing process; and/or a machining or milling process. The material removal is performed along the manufacturing contour. The 2D sketch feature or union of all fitted curves may thus be directly translated into a 2D printing path (to specify the boundaries of the path of 2D printing tool) or a machining path (to machine the silhouette of the mechanical part or a contour of a through hole, or to machine an adapted stamping tool or a mold or an insert for mold). The method of use thus allows to increase automation of the end-to-end manufacturing process of a mechanical part having a new and optimal shape (as provided by the structural optimization). In addition, the canonicity of the primitive curves simplifies or even makes possible the translation of the 3D CAD model into CAM specifications. The fitted curves may indeed be directly translated into a manufacturing path. In other words, the fitted curves form as such control data that specify a path of a manufacturing tool. This not only is not feasible with raw 2D polyline profiles, but also would it lead to dented paths (zigzags) that would lead to a mechanical part with very poor mechanical properties.

The architecture of the function is now discussed in more detail.

The function may comprise a graph neural network configured to take an input graph having nodes and edges. Each node of the input graph may represent a respective point of the input 2D polyline profile, and each edge of the input graph may connect a respective pair of nodes and represent a respective segment of the input 2D polyline profile between the points represented by the respective pair of nodes. In case the function comprises two neural networks, one for outputting the class and one for outputting the number of sides, when applicable, the two neural networks may each be such a graph neural network.

It has been found that processing an input 2D polyline profile as the graph it represents allows for an efficient training S20 and accurate inferences S200. The input 2D polyline profile may alternatively be represented in an image, and the function may comprise an image-based neural network such as CNN. A graph neural network is however lighter, thus enabling faster computations at training and at inference.

The input graph may comprise, associated to each node and thus processed by the graph neural network, coordinates of the respective point represented by the node. Positioning information for the points of the polylines has been found to allow accurate inference. As mentioned above, the coordinates may be standardized, for example normalized and/or centered. This improves accuracy.

The input graph may additionally or alternatively comprise, at each node between a respective pair of edges, an angle between the respective pair of edges. Taking into account, at training and inference, the consecutive angles formed by consecutive segments of the 2D polyline profiles has been found to improve accuracy. Optionally, an angle value of 0 can be stored for the first and last node of the polyline.

The graph neural network may comprise several graph layers, and/or followed by a graph pooling layer for information aggregation. Each graph layer may include a graph convolutional layer, such as a Residual Gated Graph Convolutional operator, and a regularization function. The regularization function may be a rectifier function. Such an architecture allows for the obtention of more accurate and robust results (robustness being achieved notably by limiting overfitting).

Additionally or alternatively, the function may comprise a neural network (i.e., the/each graph neural network) configured to take input information relative to at least one of:
- openness or closeness of the input 2D polyline profile, in other words a binary value/label indicating if the input 2D polyline profile is open or closed,
- a measurement of perimeter of the input 2D polyline profile, in other words a sum of the length of all segments of the input 2D polyline profile, and
- a measurement of a surface area of one or more bounding boxes of the input 2D polyline profile, in other words a value of the area occupied by one or more smallest boxes containing the input 2D polyline profile and oriented in a certain manner.

Such (extra) properties defined by input 2D polyline profiles improve accuracy of the predictions. The dataset may thus include a value of these properties for at least part (e.g., all) the training samples, and in the method of use the input may correspondingly (e.g., optionally) include a value of these properties.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

The methods generally manipulates modeled objects (i.e., result of structural optimization and 3D CAD model). A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD and PLM system, as will be apparent from the definitions of such systems provided below.

By CAD system, it is additionally meant any system adapted at least for shaping a digital mockup on the basis of a graphical representation of the modeled object, such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 3D modeled object, e.g. representing a product such as a part or an assembly of parts, or possibly an assembly of products. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates shaping (i.e. increases the speed at which mechanical engineers statistically accomplish their task). This speeds up the manufacturing process in the industry, as the shaping of the products is part of the manufacturing process.

The 3D modeled object may represent the geometry of a product to be manufactured in the real world subsequent to the completion of its shaping with for instance a CAD software solution or CAD system, such as a (e.g., mechanical) part or assembly of parts (or equivalently an assembly of parts, as the assembly of parts may be seen as a part itself from the point of view of the method of use, or the method of use may be applied independently to each part of the assembly), or more generally any rigid body assembly (e.g., a mobile mechanism). A CAD software solution allows the shaping of products in various and unlimited industrial fields, including: aerospace, architecture, construction, consumer goods, high-tech devices, industrial equipment, transportation, marine, and/or offshore oil/gas production or transportation. The 3D modeled object shaped by the method of use may thus represent an industrial product which may be any mechanical part, such as a part of a terrestrial vehicle (including, e.g., car and light truck equipment, racing cars, motorcycles, truck and motor equipment, trucks and buses, trains), a part of an aerial vehicle (including, e.g., airframe equipment, aerospace equipment, propulsion equipment, defense products, airline equipment, space equipment), a part of a naval vehicle (including, e.g., navy equipment, commercial ships, offshore equipment, yachts and workboats, marine equipment), a general mechanical part (including, e.g., industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including, e.g., furniture, home and garden products, leisure goods, fashion products, hard goods retailers' products, soft goods retailers' products), a packaging (including, e.g., food and beverage and tobacco, beauty and personal care, household product packaging).

A CAD system may be history-based. In this case, a modeled object is further defined by data comprising a history of geometrical features. A modeled object may indeed be shaped by a physical person (i.e., the mechanical engineer) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of shaping features is typically saved through an acyclic data flow linking the said geometrical features together through input and output links. The history based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g. a tessellation of) the B-rep. The history of the part is the shaping intent. Basically, the history gathers the information on the operations which the modeled object has undergone. The B-rep may be saved together with the history, to make it easier to display complex parts. The history may be saved together with the B-rep in order to allow shaping changes of the part according to the shaping intent.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA^{®}.

CAD and CAM solutions are therefore tightly related. Indeed, a CAD solution focuses on the shaping of a product or part and CAM solution focuses on how to make it. Constructing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin or digital mockup, of an object to be manufactured with two objectives:
- checking the correct behavior of the object to be manufactured in a specific environment; and
- ensuring the manufacturability of the object to be manufactured.

The CAD model may be feature-based (e.g., it may comprise a feature tree, and optionally a corresponding B-rep obtained by executing the feature tree). A feature-based 3D model allows (e.g., during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (e.g., during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

A key characteristic of a CAD model is that it may be built exactly and unambiguously by chaining a small number of high-level parameterized operations (including for example, but to limited to, sketch, extrusion, chamfer) and edited by modifying its high-level parameters. That this is a key distinction with the polyhedral or polygonal representations such as a triangular surface mesh which may represent any 3D shape but do not provide modification or parameterization capabilities required in an industrial context. Such polyhedral or polygonal representations are referred to as "non-parametric" and "discrete" representations, and the result of structural optimizations may be such kinds of representations. In contrast, a 3D CAD model (e.g., including a feature tree and/or a B-Rep) is a parametric representation.

As CAD model is a parameterized model of a part/product, it is lighter in terms of memory footprint than other models such as a CAE model. Indeed, instead of storing a collection of discrete geometrical elements such as finite elements, a CAD model allows the storing of a list of features and parameters, which is lighter in terms of storage and memory footprint. Working on CAD models thus reduced memory requirements for the underlying systems, as compared for example to CAE models, in addition to facilitate editability of the model. This amounts to say that a CAE to CAD conversion process in fact compresses the CAE model into a CAD model which is lighter in terms of memory requirements (e.g. footprint), in addition to transforming the CAE model into a more easily editable CAD model.

The generation of a custom computer program from CAD files may be automated. Such generation may therefore be errorproof and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D mockups.

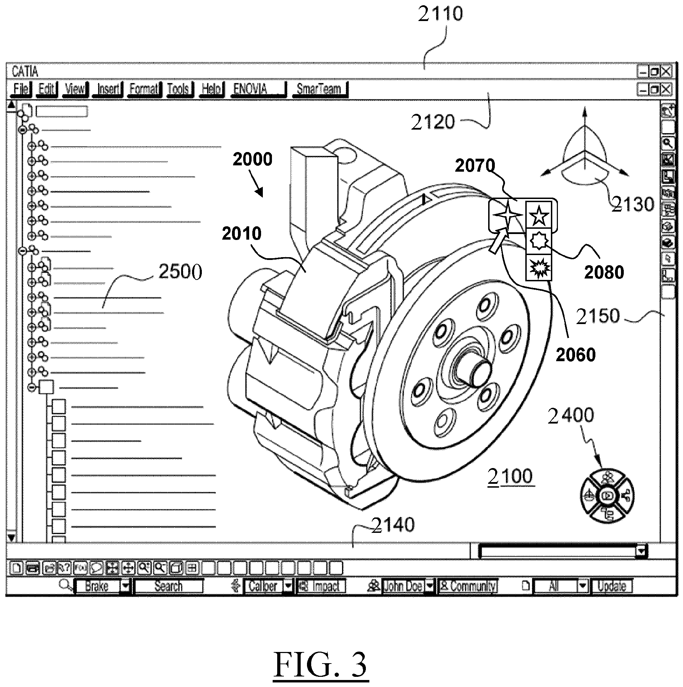

FIG. 3 shows an example of the GUI of the system, wherein the system is a CAD system.

The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a mechanical engineer may for example preselect a part of the object 2000 and then initiate an operation (e.g. change the dimension, color, etc.) or edit geometrical constraints by selecting an appropriate icon. For example, typical CAD operations are the modeling of the punching or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

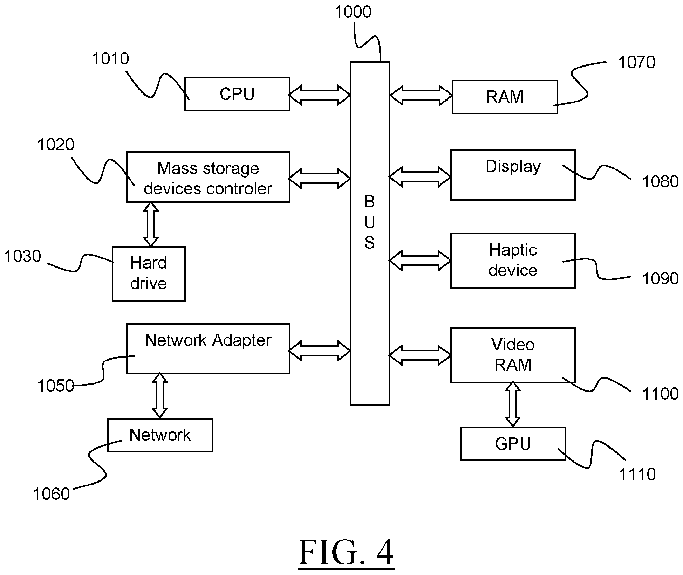

FIG. 4 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the methods. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the methods by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the methods. The computer program may alternatively be stored and executed on a server of a cloud computing environment, the server being in communication across a network with one or more clients. In such a case a processing unit executes the instructions comprised by the program, thereby causing the methods to be performed on the cloud computing environment.

The method of use may be included in a manufacturing process, which may comprise, after performing the method of use, producing a physical product corresponding to the modeled object, i.e., the 3D CAD model. The manufacturing process may comprise executing the determined CAM specifications with the appropriate manufacturing system. In any case, the modeled object shaped by the method of use may represent a manufacturing object. The modeled object may thus be a modeled solid (i.e., a modeled object that represents a solid). The manufacturing object may be a product, such as a part, or an assembly of parts. Because the method of use improves ergonomics of the shaping of the modeled object, the method of use also improves the manufacturing of a product and thus increases productivity of the manufacturing process.

The method of use may be included in a production process, which may comprise, after performing the method of use, producing a physical product corresponding to the 3D CAD model outputted by the method of use. The production process may comprise the following steps:
- (e.g., automatically) applying the method of use, thereby obtaining the CAD model outputted by the method of use;
- using the obtained CAD model for manufacturing the part/product.

Using a CAD model for manufacturing designates any real-world action or series of action that is/are involved in/participate to the manufacturing of the product/part represented by the CAD model. Using the CAD model for manufacturing may for example comprise one or more of the following steps:
- editing the obtained CAD model;
- performing simulation(s) based on the CAD model or on a corresponding CAE model (e.g., the CAE model from which the CAD model stems, after a CAE to CAD conversion process), such as simulations for validation of mechanical, use and/or manufacturing properties and/or constraints (e.g., structural simulations, thermodynamics simulation, aerodynamic simulations);

- editing the CAD model based on the results of the simulation(s);
- optionally (i.e., depending on the manufacturing process used, the production of the mechanical product may or may not comprise this step), (e.g., automatically) determining a manufacturing file/CAM file (e.g., comprising manufacturing instructions for manufacturing the product represented by the CAD model and/or control instructions for the manufacturing process and/or for commanding the manufacturing process or manufacturing tool(s) thereof) based on the (e.g., edited) CAD model (e.g., the control instructions stem from the CAD file storing the CAD model and/or specifications of the CAD model), for production/manufacturing of the manufacturing product; the CAM file may comprise one or more toolpaths each specified by a respective one or more primitive curves fitted by the method of use of use to the initial 2D polyline profiles;
- sending the CAD file and/or the manufacturing file/CAM file to a factory in view of manufacturing the product represented by the CAD model; and/or
- (e.g., automatically) producing/manufacturing, based on the determined manufacturing file/CAM file or on the CAD model, the mechanical product originally represented by the model outputted by the method of use. This may include feeding (e.g.,. automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, *e.g.* upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more bending steps, one or more deep drawing steps, one or more molding steps, one or more machining steps (e.g. milling steps) and/or one or more punching steps. Because the method of use improves the shaping of a model (e.g., CAD) representing the part/product, the manufacturing and its productivity are also improved.

Editing the CAD model may comprise, by a user (*i.e.* a designer), performing one or more editions of the CAD model, *e.g.* by using a CAD solution. The modifications of the CAD model may include one or more modifications each of a geometry and/or of a parameter of the CAD model. The modifications may include any modification or series of modifications performed on a feature tree of the model (*e.g.* modification of feature parameters and/or specifications) and/or modifications performed on a displayed representation of the CAD model (*e.g.* a B-rep). The modifications are modifications which maintain the technical functionalities of the part/product, *i.e.* the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing set up model obtained from the CAD model. The manufacturing set up may comprise all data required for manufacturing the mechanical product (*e.g.* control instructions for controlling the manufacturing process) so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (*e.g.* automatically) determining a production file from the CAD model (*e.g.* any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:
- Fusion 360,
- FreeCAD,
- CATIA,
- SOLIDWORKS,
- The NC Shop Floor programmer of Dassault Systèmes illustrated on https://my.3dexperience.3ds.com/welcome/fr/compass-world/rootroles/nc-shop-floor-programmer,
- The NC Mill-Turn Machine Programmer of Dassault Systèmes illustrated on https://my.3dexperience.3ds.com/welcome/fr/compass-world/rootroles/nc-mill-turn-machine-programmer, and/or
- The Powder Bed Machine Programmer of Dassault Systèmes illustrated on https://my.3dexperience.3ds.com/welcome/fr/compass-world/rootroles/powder-bed-machine-programmer.

The product/part may be an additive manufacturable part, *i.e.* a part to be manufactured by additive manufacturing (*i.e.* 3D printing). In this case, the production process does not comprise the step of determining the CAM file and directly proceeds to the producing/manufacturing step, by directly (*e.g.* and automatically) feeding a 3D printer with the CAD model. 3D printers are configured for, upon being fed with a CAD model representing a mechanical product (*e.g.* and upon launching, by a 3D printer operator, the 3D printing), directly and automatically 3D print the mechanical product in accordance with the CAD model. In other words, the 3D printer receive the CAD model, which is (*e.g.* automatically) fed to it, reads (*e.g.* automatically) the CAD model, and prints (*e.g.* automatically) the part by adding together material, *e.g.* layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.* by a user (*e.g.* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (*e.g.* automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part (*i.e.* a part manufactured by machining), such as a milled part (*i.e.* a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (*e.g.* automatically) checking if the CAD model has any geometric particularity (*e.g.* error or artefact) that may affect the production process and (*e.g.* automatically) correcting such particularities. For example, machining or milling based on the CAD model may not be carried out if the CAD model still comprises sharp edges (because the machining or milling tool cannot create sharp edges), and in such a case the determination of the CAM file may comprise (*e.g.* automatically) rounding or filleting such sharp edges (*e.g.* with a round or fillet radius that corresponds, *e.g.* substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (*e.g.* rounding or filleting of geometries) may be carried out automatically as previously discussed, but also, by a user (*e.g.* a machining engineer), which performs the correction by hand on a CAD and/or CAM solution, *e.g.* the solution constraining the user to perform corrections that make the CAD model compliant with specifications of the tool used in the machining process.

Further to the check, the determination of the CAM file may comprise (*e.g.* automatically) determining the machining or milling path, *i.e*. the path to be taken by the machining tool to machine the product. The path may comprise a set of coordinates and/or a parameterized trajectory to be followed by the machining tool for machining, and determining the path may comprise (*e.g.* automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, *e.g.* that the tool continuously follows without breaking contact with the material to be cut. Alternatively, the path may be a concatenation of a sequence sub-paths to be followed in a certain order by the tool, *e.g.* each being continuously followed by the tool without breaking contact with the material to be cut. Optionally, the determination of the CAM file may then comprise (*e.g.* automatically) setting machine parameters, including cutting speed, cut/pierce height, and/or mold opening stroke, for example based on the determined path and on the specification of the machine. Optionally, the determination of the CAM file may then comprise (*e.g.* automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (*e.g.* directly and automatically) fed to the machining tool and/or the machining tool may then (*e.g.* directly and automatically) be programmed by reading the file, upon which the production process comprises the producing/manufacturing step where the machine performs the machining of the product according to the production file, *e.g.* by directly and automatically executing the production file. The machining process comprises the machining tool cutting a real-world block of material to reproduce the geometry and/or distribution of material captured by the CAD model, *e.g.* up to a tolerance error (*e.g.* tens of microns for milling).

The product/part may alternatively be a molded part, *i.e.* a part manufactured by molding (*e.g.* injection-molding). In such a case, the production process may comprise the step of determining the CAM file. This step may be carried out automatically, by any suitable CAM solution to automatically obtain a CAM file from a CAD model of a molded part. The determining of the CAM file may comprise (e.g. automatically) performing a sequence of molding checks based on the CAD model to check that the geometry and/or distribution of material captured by the CAD model is adapted for molding, and *(*e*.g.* automatically) performing the appropriate corrections if the CAD model is not adapted for molding. Performing the checks and the appropriate corrections (if any) may be carried out automatically, or, alternatively, by a user (*e.g.* a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known *per se* from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (*e.g.* automatically) performing the molding based on the outputted file, where the mold shapes, for the determined hardening time, a liquid material into a shape that corresponds to the geometry and/or distribution of material captured by the CAD model, *e.g.* up to a tolerance error (*e.g.* up to the incorporation of draft angles or to the modification of draft angles, for demolding). The CAM file may additionally or alternatively control machining/milling of the mold.

The product/part may alternatively be a stamped part, also possibly referred to as "stamping part", *i.e.* a part to be manufactured in a stamping process. The production process may in this case comprise (*e.g.* automatically) determining a CAM file based on the CAD model. The CAD model represents the stamping part, *e.g.* possible with one or more flanges if the part is to comprise some, and possibly in this latter case with extra material to be removed so as to form an unfolded state of one or more flanges of the part, as known *per se* from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (*e.g.* automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, *e.g.* as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, *e.g.* directly and automatically, the CAM file, and perform the stamping process (*e.g.* automatically) based on the file. The stamping process may comprise stamping (*e.g.* punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state. The CAM file may additionally or alternatively control machining/milling of the stamping die(s) or punch(es), or of a mold for manufacturing said stamping die(s) or punch(es).

Implementations of the methods and tested examples of such implementations are now discussed with reference to the remaining figures.

An implementation may consist in applying primitive recognition in the context of mechanical shape reconstruction, with the objective of reconstructing as fast as possible various geometries with primitives for which a reasonable set of parameters can be defined (i.e. to parametrize an initially unparameterized 3D shape). For example, a rounded polygon of three sides may be parametrized with as few as four parameters (three lengths and one radius).

A naive solution would be to use as "primitive" a B-Spline with a fixed number of points equal to 20, which fits the profiles.

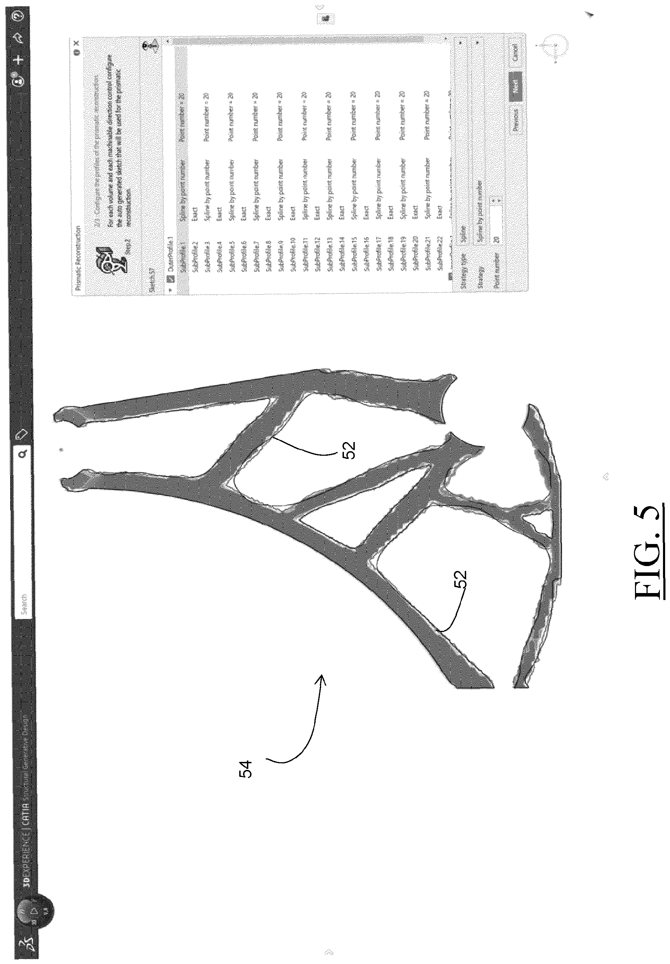

FIG. 5 illustrates such a naive solution, where B-Splines 52 are fitted to a plurality of input 2D polyline profiles 54 each representing respectively a portion of a manufacturing contour in a result of a structural (e.g., topology) optimization that represents a mechanical part. Such an approximation rule makes the process quite complex and time consuming, as parametrizing each point of the spline manually takes time, in particular when the mechanical engineer wants to edit the mechanical part. Furthermore, B-Splines take time to be translated into a toolpath, and in additional the tool takes time to follow the path (longer than when the tool follows a segment or a straight side of a polygon other shape for example, or even longer than when the tool follows a circle portion).

In contrast, implementations herein propose a different approximation rule, that makes the parametrization easier and that can still achieve fitting of a profile in an accurate manner. The implementations allow to find the right primitive, that is, a primitive curve that fits the profile generated by the non-parametric optimization which is the easiest to parametrize, while stable and fitting as close as possible the results.

The implementations amount to a computer implemented method for training a machine-learning function configured for classifying polylines from a 3D object representing a mechanical part. The proposed solution involves the construction of a training dataset, to train a neural network via the extraction and labeling of 2D polylines, e.g., from a set of 3D objects. The labeling consists in associating a geometrical primitive to each extracted 2D polyline.

In the implementations, labels may be any one of the following set (the full list was used in the tested examples):
- Rounded Polyline,
- Rounded Polygon,
- Spline by Points,
- Segment,
- Square,
- Rectangle,
- Circle,
- Ellipse,
- Tear Drop, and
- Elongated hole.

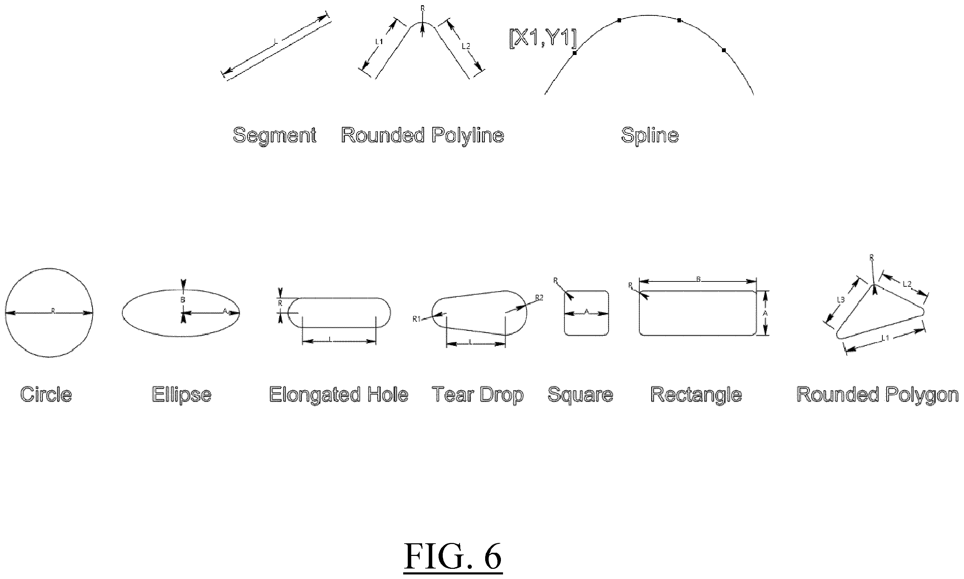

FIG. 6 illustrates the aforementioned geometrical primitives, with the open curves on the first line (segment class, rounded polyline class, and spline class), and the closed curves on the second line. The parameters of the primitives are shown on the figure.

For reconstruction, certain primitives in the set - Rounded Polyline and Rounded Polygon - may demand further parametrization, requiring a specified number of sides. Therefore, the machine-learning model of the implementations may, as tested, be configured for predicting both the primitive class and the associated number of sides, as learnt from a comprehensive data corpus. This approach enables an accelerated reconstruction of a mechanical shape based on the results of a non-parametric optimization.

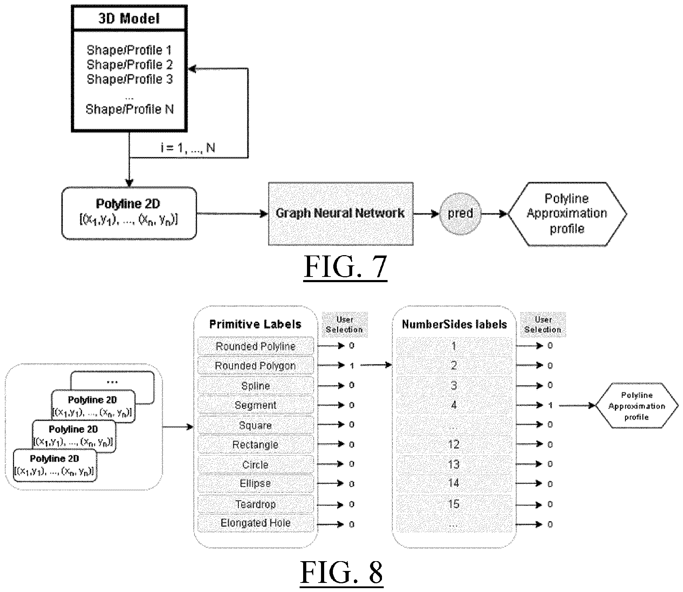

FIG. 7 shows an architecture diagram which corresponds to the processing of a 3D model by the implementations (i.e. processing of all 2D profiles contained in the model). The proposed solution enables users to automatically reconstruct a mechanical part with parametric oriented primitives. The application of the machine-learnt function at S200 results in the selection of the primitives that can best fit the optimization results while remaining easy to parametrize, all in a fast manner compared to traditional approaches that would have leveraged optimization techniques.

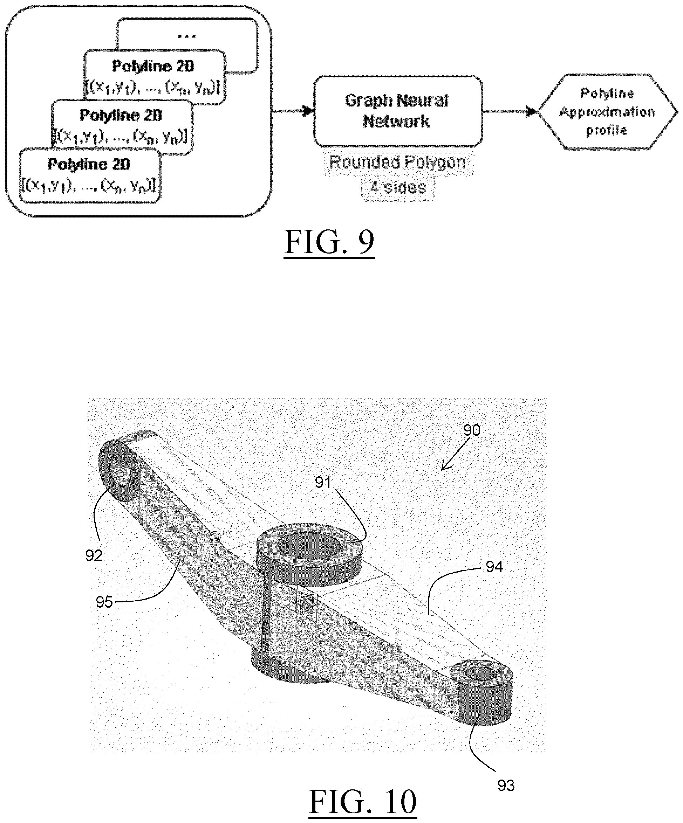

The diagram of FIG. 8 depicts a manual workflow for the reconstruction of a 3D model, and the diagram of FIG. 9 the proposed Al-powered approach of the implementations.

The Al-based implementations to recognize 2D profile primitives may be integrated into a suite of shaping assistance techniques for milling, prismatic and bead reconstruction. These techniques are step-by-step tailored assistants guiding a mechanical engineer through the following sequential steps:
1. Profile selection;
2. Manual selection of approximation laws (i.e. primitive labels);
3. Conversion to sketch ;
4. Construction of a feature tree for representing the mechanical part;
5. Boundary representation generation based on the feature tree.

FIG. 10 shows a setting of a 3D topology optimization according to a tested example of the implementations. The 3D topology optimization comprises providing a gridding of a design space 90, with frozen cylindrical portions 91, 92 and 93 and optimizable portions 94 and 95. The 3D topology optimization is thus free to vary topology and shape of the material distribution inside portions 94 and 95, but the whole of portions 91, 92 and 93 must remain filled with material. Portions 91, 92 and 93 thus form clamping conditions, as the 3D topology optimization is constrained to result in an integrally formed structure connecting cylindrical portions 91, 92 and 93 together.

The aim of the illustrated 3D topology optimization may be to later manufacture a fixture tool having grooves (represented by cylindrical portions 91, 92 and 93) with a predefined dimension and orientation for receiving a plurality of shafts to fulfill a predefined mechanical function. The 3D topology optimization may serve, e.g., given a predefined material, to optimize at least one of weight and compliance (or stiffness), for example under a constraint with respect to the other one of weight and compliance.

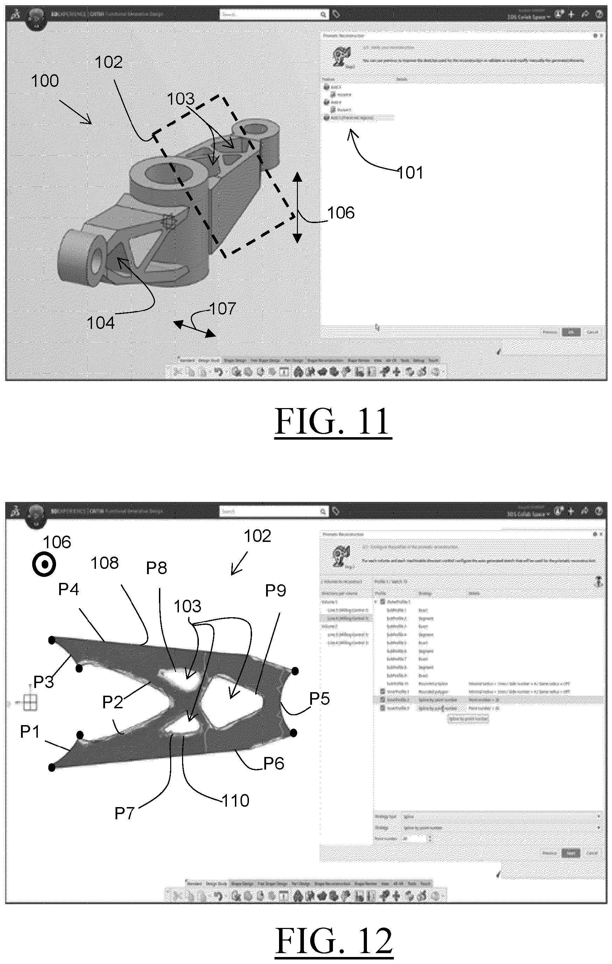

FIG. 11 shows a boundary representation 100 and a feature tree 101 of a 3D CAD model reconstructed as the result of the 3D topology optimization illustrated on FIG. 10. A 3D topology optimization has thus been performed, with manufacturing directions 106 and 107 within the constraints, so as to obtain a shape of a machining or milling mechanical part, having machined through holes 103 and 104 along both respective manufacturing directions 106 and 107. The mechanical part has an optimized portion 102 corresponding to optimizable portion 94 shown on FIG. 10. Optimized portion 102 has through holes 103 along manufacturing direction 106, as further discussed below with reference to FIG. 12.

FIG. 12 shows the union of a silhouette 108 of a mechanical part in the direction 106 (i.e., external contour 108) and of three internal contours 110 of holes 103. All contours 108, 110 can be subdivided into profiles P1 to P9 based on the results of the topology optimization. P1 and P3 each form continuous pieces of the silhouette 108 that bound frozen portion 91, and similarly P5 bounds frozen portion 93 (see FIG. 10). P1, P3 and P5 are thus first continuous pieces that may be directly determined from the initial constraints of the 3D topology optimization and each outputted as a respective 2D parameterized (e.g., primitive) curve, or alternatively as a 2D polyline profile to be inputted to the machine-learnt function. All remaining continuous pieces of the silhouette 108 and of a through hole contour 110 are second continuous pieces that may subsequently be determined, and each such remaining second continuous piece may be outputted as a respective 2D polyline profile to be inputted to the machine-learnt function (e.g., without being further subdivided). These are P2, P4, P6, P7, P8, P9. Thus, the frozen portions 91 and 93 of the topology optimization directly provide the subdivision of the silhouette and internal contours for the next stage of the method of use.

The 2D profiles P1 to P9 comprise six open 2D profiles and three closed 2D polyline profiles P7 to P9. To construct the 3D CAD model 100,101 of FIG. 11, the implementations may apply at S200 the machine-learnt function to each 2D polyline profile P2, P4, P6, P7, P8, and P9 (or alternatively P1 to P9) so as to determine a primitive curve class for each profile, and if the class is rounded polyline (e.g., see P2, P4 and P6) or rounded polygon (e.g., see P7 to P9), further a number of sides for the class (e.g., 2 for P4 and P6, 2 for P7 and P8, and 4 for P2 and P9). In the tested example illustrated, P1, P3 and P5 were determined as circle sections based on the exact geometry of frozen portions 91 and 93 provided to the topology optimization, as the system handles circle sections (if the system did not handle circle sections, P1, P3 and P5 could be fitted directly each with a B-Spline approximating such circle section). Alternatively, if retrieved like the other profiles as 2D polyline profiles and inputted to the machine-learnt function, P1 and P3 could be fitted with B-Spline or segments, and P5 could be fitted with a B-Spline. After determining the primitive class, the implementations may comprise fitting each initial 2D polyline profile with a primitive curve of the determined class in any manner presented above.

Such reconstruction was in the tested examples after a training S20 based on a dataset obtained from manual reconstructions by users. The tested dataset-forming method comprised identifying various models (i.e., mechanical parts) that had been topology-optimized, e.g., with milling or bead specifications, and that had been reconstructed with the milling, prismatic or bead assistant of CATIA. Each model can generate several profiles as illustrated by FIG.s 10-12.

Leveraging this database, the tested dataset-forming method comprised extracting the profile specifications as a CSV file with annotations such as:
- Primitive class selected by the user,
- Number of sides,
- Openness or closeness of 2D polyline profile, and
- Coordinates of all points of the 2D polyline profile.

The tested example was based on a graph neural network architecture of the function.

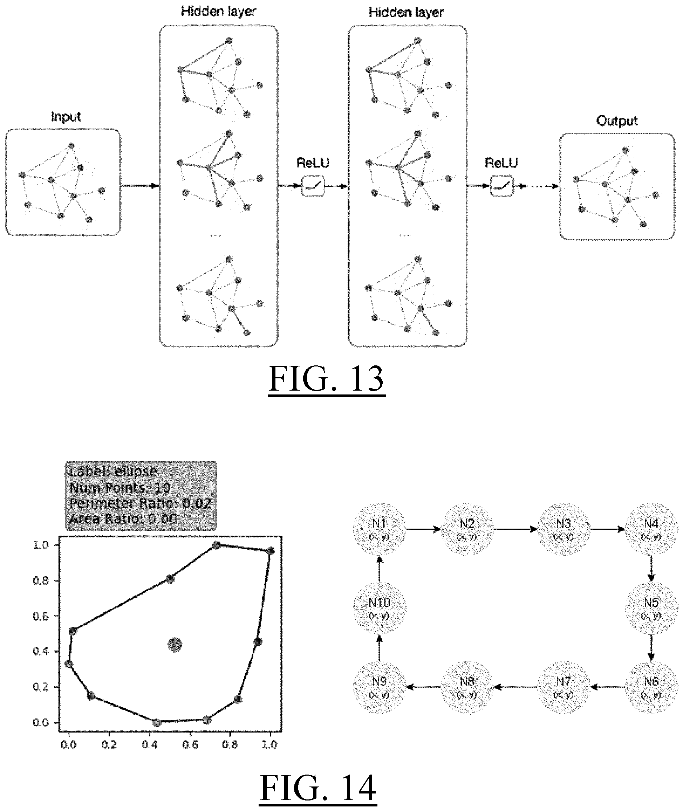

FIG. 13 shows such an architecture.

As known, Graph Neural Networks (GNNs) belong to a class of artificial neural networks designed to process and learn patterns from graph-structured data.

GNNs perform neighborhood aggregation, updating node features by aggregating information from direct neighbors at each graph layer. This allows for information sharing as well as the capture of local context.

There are three main types of graph applications:
- Graph-level tasks
- Node-level tasks
- Edge-level tasks

In the tested examples, each 2D polyline profile was processed into a point cloud and represented as a graph containing nodes and edges (each node being associated with a point in the profile). This resulted in a homogeneous graph (with a unique type of nodes).

FIG. 14 is an example of how such a point cloud obtained from a 2D polyline profile may be represented in a graph format.

The dataset was composed as follows.

The dataset was initially based on 40 different 3D CAD models (CAD mechanical parts), containing an aggregation of 1172 training examples including each 2D polyline profile associated with a corresponding primitive curve.

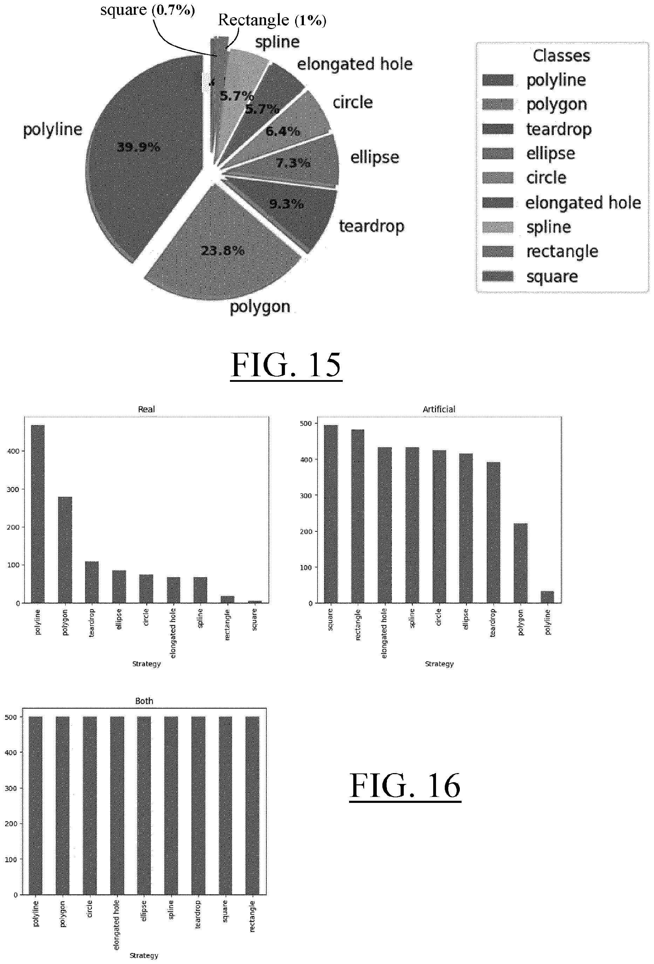

FIG. 15 shows the class distribution obtained at this stage.

The dataset-forming method may comprise augmenting the dataset by performing any one or more of the following operations:
- Rotations;
- Decimation and Distribution: comprising removing or adding points in the profiles in order to manage the variable size of the profiles;
- Zero-centering of point coordinates; and
- Normalization of point coordinates.

For a strongly unbalanced dataset, two approaches may be considered to achieve full balance or improve balance:
1. Data Augmentation based on a single threshold value, resulting in a fully balanced dataset; or
2. Data Augmentation based on multipliers and several threshold values resulting in a dataset that is still unbalanced (although less significantly than originally), plus use of class weights to compute the loss for model training.

Approach 1 results in significantly more synthetic data points created than Approach 2, especially for underrepresented classes (the distributions of real profiles vs synthetic/artificial profiles are inverse, as depicted below).

FIG. 16 shows data distributions resulting from Approach 1.

In the tested example, Approach 2 was retained to train the neural network configured for outputting the primitive class, whereas Approach 1 was retained to train the neural network configured for outputting the number of sides.

The following properties where captured as graph information (and tested):
- **Data.Position** (shape (N,2) with N being the number of points). Example: [X0,Y0],[X1,Y1],...[XN,YN]. Each coordinate given is centered around zero and normalized.
- **Data.x** (shape (N,2) with N being the number of points). x represents information added to the node and includes the Angle (angle with the last point) and the Open/close profile information. (Angles are normalized by 180 degrees). Example: [alpha1, Open], [alpha2, Open],.... Each point's distance to the graph/profile's centroid may further be computed and can optionally be added to **Data.x.**
- **Data.Edge_Index** (shape (2, N') with N' being the number of connections, which varies if profile is open or close. Example: [0,1,1,2,2,3,...N-1,N],[1,0,2,1,3,2,..., N,N-1]

Additionally, the following profile information was obtained and may optionally be added to improve accuracy (tested separately).
- **Data.Perimeter_Ratio:** the ratio between the profile's perimeter and the largest profile perimeter found in the model (i.e. considering all model profiles)
- **Data.XY_Area_Ratio:** the ratio between the profile bounding box's surface area and the largest profile XY surface area found in the model (i.e. considering all model profiles)
- **Data.Area_Ratio:** same as the *XY_Area_Ratio* but using the inertia axes instead of X and Y

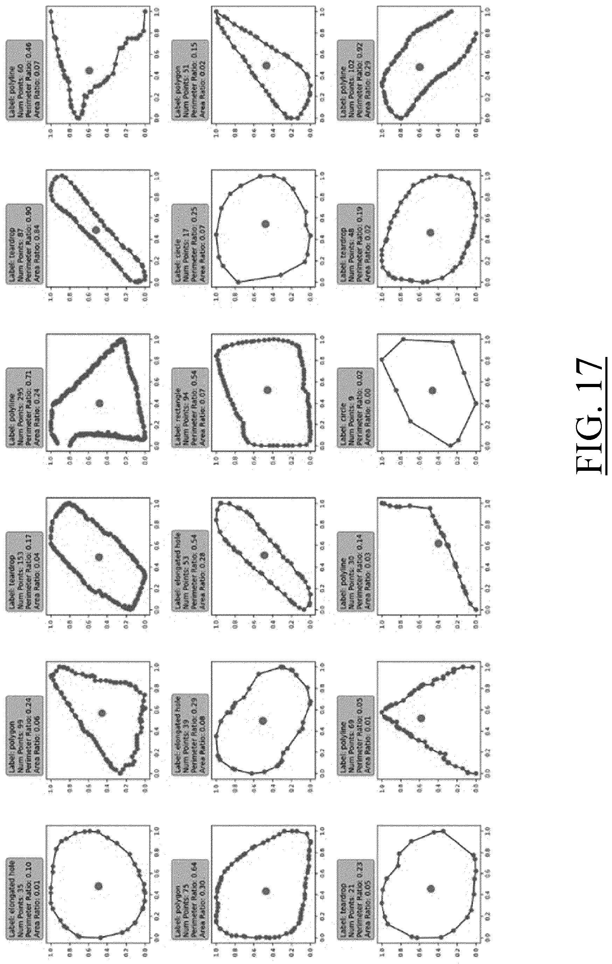

FIG. 17 shows a grid which depicts profiles along with their primitive label, number of points, perimeter ratio value and area ratio value. The implementations may comprise displaying such a grid to the user after applications of the machine-learnt function. This allows for quick group visualization as well as shines a light on an inconsistent labeling issue/property of the data that needs to be addressed to improve performance (see more information about this later).

The same Data Processing and Augmentation approach was used for the Number of Sides data, with the following specifics:
1. All segment labels in the dataset were replaced by a Polyline with 1 side; and
2. All primitives except Polyline and Polygon were removed.

Approach 1 was used to generate the learning data used to develop the Number of Sides model delivered.

Two modifications of the standard *categorical cross entropy* loss function were put in place to train the machine learning model in the test examples:
1. The straightforward addition of class weights, setting the weights as inverse frequencies of the labels in the original data distribution (which is standard practice in machine learning for unbalanced datasets).
2. The addition of penalty factors to the loss, in order to influence the model's behavior (which favors overpredicting the number of sides of a given primitive rather than underpredicting).

The approach used for data splitting without introducing too many biases consisted in associating each synthetic profile generated via data augmentation with its "parent" real profile via an ID. Next, these IDs were used to distribute graphs/profiles between the training and the validation sets, ensuring that each real profile remained with all synthetic profiles that were derived from it (as they were too similar and would introduce strong biases). Moreover, this was done while reasonably preserving the original class distribution. The test/validation set above corresponds to the held-out model primitives.

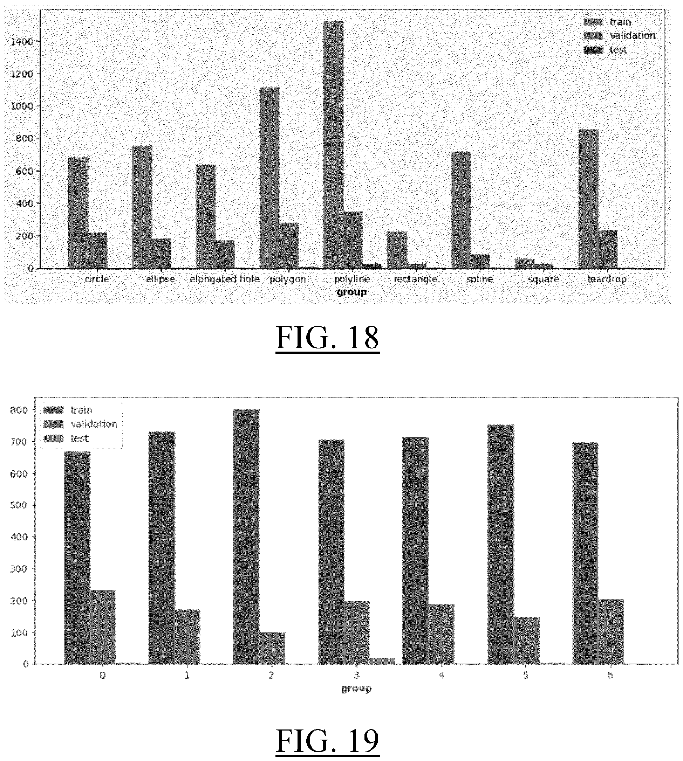

FIG. 18 shows the final class distribution for Primitive Class.
FIG. 19 shows the final class distribution for Number of Sides.

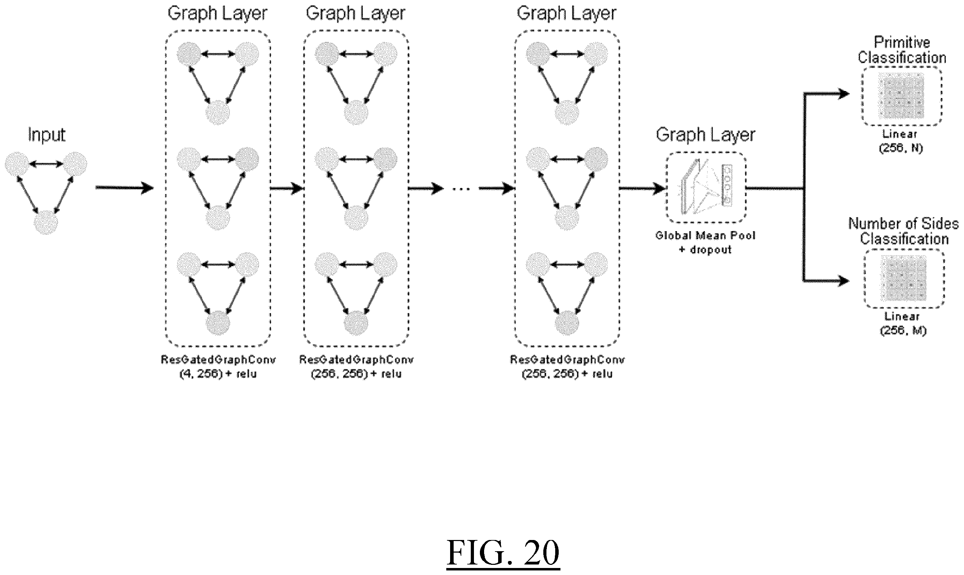

FIG. 20 shows the model structure tested for both classification tasks.

The Graph Neural Network (GNN) model leverages a sequence of graph layers in charge of aggregating information from neighboring nodes and updating node representations, followed by a graph pooling layer that results in a single graph-level representation (called an embedding). Finally, two separate prediction streams generate the final model predictions for the primitive type and the number of sides.

Different examples were tested with different numbers of graph layers, hyper parameter values, training details, and other Al model development characteristics.

Additionally, further test experiments were carried out, such as the infusion of graph-level features (e.g., perimeter ratios, area ratios, geometric information) into late graph layer representations. These further tests showed particularly promising results to address the issue/property of contradictory/inconsistent labels. This issue may arise, as a large profile (on the reference frame/scale of the 3D model) tends to have a different primitive label than small profiles for very similar shapes. This is due to the stronger tendency of a mechanical engineer to approximate a tiny profile by a simple shape such as a square or a circle, whereas a large profile is usually be better fitted (e.g., using polylines or polygons). Without features related to scale, size or aspect ratio, the model may more difficulty distinguish between the two, resulting in a lower learning performance.

Results of tested exampled are now discussed.

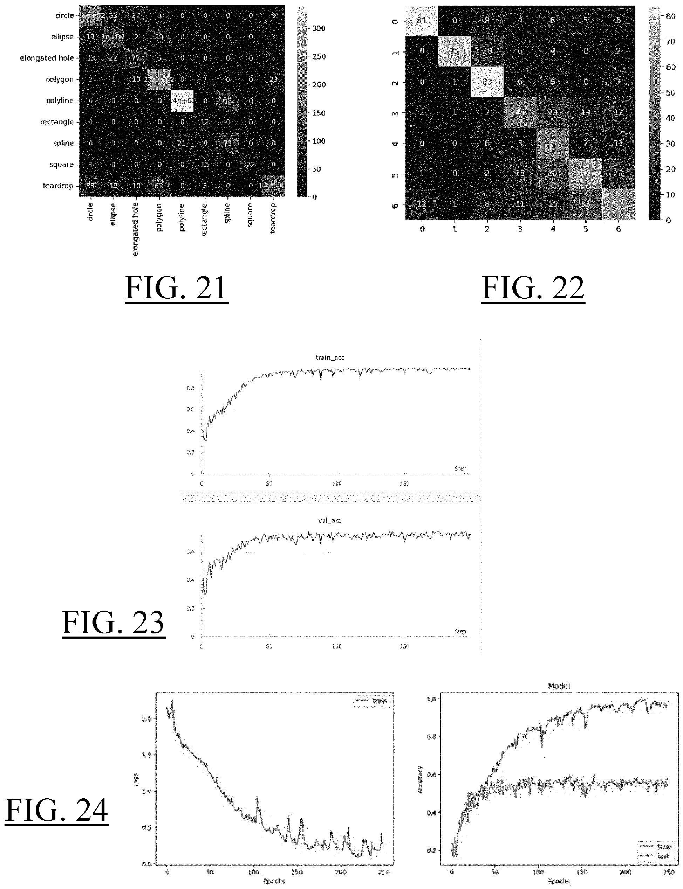

For primitive classification, a model was trained for over 200 epochs with an optimizer step at 0.005. The achieved validation accuracy was 0.723, and the achieved held-out test accuracy was 0.811. FIG. 21 shows the confusion matrix on the validation set. FIG. 23 shows the training loss and validation accuracy plots

For the prediction of the number of sides, a model was similarly trained for over 200 epochs with an optimizer step at 0.005. The achieved validation accuracy was 0.572, the achieved validation accuracy higher* was 0.881, the achieved held-out test accuracy achieved was 0.33, and the achieved held-out test accuracy higher* achieved was 0.48. Each "accuracy higher*" metric is obtained by considering a prediction as good if the predicted number of sides is correct (i.e., equal to the true value) or higher. FIG. 22shows the confusion matrix on the validation set. FIG. 24 shows the training loss and validation accuracy plots

The obtained results were thus highly positive, validating the approach and the selected learning configuration (e.g., data augmentation, hyperparameters, model architecture).

Variations may be implemented in a situation where there are contradictory/inconsistent labels. Improvements in such a case include any one or more of the following:
- Leveraging more features, especially graph-level "global" features, as discussed above, enabling the model to learn more intricate patterns.
- Varying the neural network architecture (e.g., to impart smoother transitions, and/or deeper and more complex architecture).
- Higher hyper-parameter optimization.
- A single architecture that learns/performs primitive classification and number of sides prediction simultaneously (joint learning).
- Growing and improving the training data corpus.

The present disclosure has described methods proposed for processing 2D polyline profiles each representing respectively a portion of a manufacturing contour in a result of a structural optimization that represents a mechanical part. But the presented concepts apply equally to any other representation of a mechanical part that has the same format as a result of a structural optimization, or that can lead to 2D polyline profiles in a same manner. Thus, more generally, the 2D polyline profiles may each represent respectively a portion of a manufacturing contour in a discrete representation of a mechanical part, such as a mesh representation. For example, one or more may be obtained in any manner, for example retrieved (if pre-stored) or computed based on the mesh representation, and/or the method may obtain 2D polyline profiles that represent altogether one or more silhouette and/or one or more though hole contours (e.g., per respective manufacturing direction), in the same manner as presented in the present disclosure. The mesh representation may be any 2D mesh representation or any 3D mesh representation, for example one obtained from a physical scanning of a physical instance of the mechanical part. The scanning of the real mechanical part may be performed by any scanning capture technology, for example a lidar technique or ultrasound echo technique.

## Claims

1. A computer-implemented method for machine-learning a function, the method comprising:
- obtaining a dataset including 2D polyline profiles each representing respectively a portion of a manufacturing contour in a result of a structural optimization that represents a mechanical part, each 2D polyline profile being associated in the dataset with a respective primitive parametric curve class among a predetermined set of primitive parametric curve classes; and
- training the function based on the dataset, the function being configured to take an input 2D polyline profile representing a portion of a manufacturing contour in a result of a structural optimization that represents a mechanical part, and to provide an output primitive parametric curve class.

2. The method of claim 1, wherein the function comprises a graph neural network configured to take an input graph having nodes and edges, each node of the input graph representing a respective point of the input 2D polyline profile, and each edge of the input graph being between a respective pair of nodes and representing a respective segment of the input 2D polyline profile between the points represented by the respective pair of nodes.

3. The method of claim 2, wherein the input graph comprises, at each node, coordinates of the respective point represented by the node.

4. The method of claim 2 or 3, wherein the input graph comprises, at each node between a respective pair of edges, an angle between the respective pair of edges.

5. The method of claim 2, 3 or 4, wherein the graph neural network comprises several graph layers each including a graph convolutional layer and a regularization function, followed by a graph pooling layer.

6. The method of any one of claims 1 to 5, wherein the function comprises a neural network configured to take input information relative to at least one of:
• openness or closeness of the input 2D polyline profile,
• a measurement of perimeter of the input 2D polyline profile, and
• a measurement of a surface area of one or more bounding boxes of the input 2D polyline profile.

7. The method of any one of claims 1 to 6, wherein the predetermined set of primitive parametric curve classes comprises at least one class of primitive parametric curves having a variable number of sides, the function being further configured to output a value of the number of sides, when the function provides as output a primitive parametric curve class among the at least one class.

8. The method of claim 7, wherein the at least one class comprises a rounded polyline class and/or a rounded polygon class.

9. The method of claim 7 or 8, wherein the training comprises minimizing a loss function which comprises a term penalizing underprediction of the number of sides.

10. The method of any one of claims 1 to 9, wherein the predetermined set of primitive parametric curve classes comprises at least one of:
• a rounded polyline class,
• a rounded polygon class,
• a spline-by-points class,
• a segment class,
• a square class,
• a rectangle class,
• a circle class,
• an ellipse class,
• a tear drop class, and
• an elongated hole class.

11. A method of use of a function machine-learnt according to the machine-learning method of any one of claims 1 to 10, comprising:
- obtaining an input 2D polyline profile representing a portion of a manufacturing contour in a result of a structural optimization that represents a mechanical part; and
- applying the function to the input 2D polyline profile, thereby providing an output primitive parametric curve class.

12. The method of use of claim 11, wherein the method of use further comprises:
- reconstructing a 3D CAD model of the mechanical part based on the output primitive parametric curve class, optionally including:
∘ instantiating a CAD planar feature parameterized with an instantiated curve of the output primitive parametric curve class; and
∘ instantiating a CAD volumetric feature which includes an extrusion of the CAD sketch feature; and
- optionally, determining CAM specifications based on the 3D CAD model, the CAM specifications including control data for material removal in a manufacturing process of the mechanical part, the material removal being performed along the manufacturing contour.

13. A computer program comprising instructions, which when executed by a processor, cause the processor to perform the method of any one of claims 1 to 10 and/or the method of claim 11 or 12.

14. A data storage medium having recorded thereon the computer program of claim 13.

15. A system comprising a processor coupled to a memory, the memory having recorded thereon the computer program of claim 13.
